# EUROPEAN PATENT APPLICATION

(11) **EP 2 541 749 A1**
(43) Date of publication of application: **02.01.2013**
(21) Application number: 11747544.2
(22) Date of filing: 25.02.2011
(51) Int. Cl.: H02M 7/48, H02M 3/155

(54) **POWER CONVERSION APPARATUS, GRID CONNECTION APPARATUS, AND GRID CONNECTION SYSTEM**

(30) Priority: 26.02.2010 JP 2010042484
(71) Applicant: Sanyo Electric Co., Ltd., Osaka 570-8677 (JP)
(72) Inventor: ESAKA, Koichiro, Osaka (JP); ITOH, Kazuo, Osaka (JP)
(74) Representative: Glawe, Delfs, Moll
(86) International application number: PCT/JP2011/054402
(87) International publication number: WO 2011/105588

(57) **Abstract**

A power converting apparatus is provided with an inverter circuit, an output short-circuiting circuit, and a control circuit. The inverter circuit comprises a first inverter switch that is configured so as to generate a first polarity voltage from DC voltage, and a second inverter switch that is configured so as to generate a second polarity voltage from the DC voltage. The output short-circuiting circuit comprises a first short-circuiting switch that is configured so as to short-circuit a power supply line that outputs the first polarity voltage, out of a pair of power supply lines, and a second short-circuiting switch that is configured so as to short-circuit a power supply line that outputs the second polarity voltage, out of the pair of power supply lines. Upon switching the polarity from the first polarity to the second polarity, the control circuit turns off the first short-circuiting switch before the timing whereby the second inverter switch is turned on.

## Description

### TECHNICAL FIELD

The present invention relates to a power converting apparatus, a grid interconnection apparatus and a grid interconnection system which convert DC voltage from a DC power supply, such as a solar cell and a fuel cell, into AC voltage.

### BACKGROUND ART

In the related art, this kind of power converting apparatus is provided with a DC-DC converter circuit which steps up DC voltage from DC power supply, an inverter circuit which converts output voltage of the DC-DC converter circuit into AC voltage and outputs the AC voltage to a pair of power supply lines, a filter circuit which removes a high frequency component in output voltage of the inverter circuit, and a control circuit which controls the inverter circuit and the output short-circuiting circuit.

Recently, a circuit system provided with an output short-circuiting circuit configured to short-circuit the pair of power supply lines described above for the improvement in conversion efficiency of the inverter circuit, noise and a leakage current is proposed (see Patent Literature 1).

In such a power converting apparatus, the output short-circuiting circuit is provided with two switching elements A and B connected between a pair of power supply lines, and the inverter circuit is provided with two pairs of switching elements A and B. The switching element A corresponds to the pair of switching elements A and the switching element B corresponds to the pair of switching elements B.

In a period in which polarity of output voltage of the power converting apparatus is positive, a state of the switching element A of the output short-circuiting circuit is kept "on," and the pair of switching elements A of the inverter circuit performs a switching operation. Here, when the state of the pair of switching elements A is "on," the output short-circuiting circuit does not short-circuit between the power supply lines and, when the state of the pair of switching elements A is "off," the switching element A forms a current path A in a direction from the negative side power supply line to a positive side power supply line to thereby short-circuit the power supply lines.

In a period in which polarity of output voltage of the power converting apparatus is negative, a state of the switching element B of the output short-circuiting circuit is kept "on," and the pair of switching elements B of the inverter circuit performs a switching operation. Here, when the state of the pair of switching elements B is "on," the output short-circuiting circuit does not short-circuit between the power supply lines and, when the state of the pair of switching elements B is "off," the switching element A forms a current path B in a direction from the positive side power supply line to a negative side power supply line to thereby short-circuit the power supply lines.

In the power converting apparatus provided with the output short-circuiting circuit, when polarity of output voltage is switched from positive to negative, the pair of switching elements B of the inverter circuit starts the switching operation and, at the same time, the state of the switching element A of the output short-circuiting circuit is switched from "on" to "off," the pair of switching elements B and the switching element A may be turned on simultaneously. As a result, there is a problem that, when polarity of output voltage is switched from positive to negative, the current path A is formed by the switching element A and thus the power supply lines are short-circuited.

Similarly, when polarity of output voltage is switched from negative to positive, the pair of switching elements A of the inverter circuit starts the switching operation and, at the same time, the state of the switching element B of the output short-circuiting circuit is switched from "on" to "off,", the pair of switching elements A and the switching element B may be turned on simultaneously. As a result, there is a problem that, when polarity of output voltage is switched from negative to positive, the current path B is formed by the switching element B and thus the power supply lines are short-circuited.

Therefore, a power converting apparatus provided with an output short-circuiting circuit has had a problem that, in timing at which polarity of output voltage of the inverter circuit is to be switched, i.e., near a zero crossing point, irregularity may occur in output voltage of the inverter circuit and thus had a low level of reliability.

### CITATION LIST

### PATENT LITERATURE

Patent Literature 1: Japanese Unexamined Patent Application Publication No. 2009-89541

### SUMMARY OF THE INVENTION

A power converting apparatus according to a first feature includes an inverter circuit (inverter circuit 3) configured to convert DC voltage into AC voltage and output the AC voltage to a pair of power supply lines, an output short-circuiting circuit (output short-circuiting circuit 4) configured to short-circuit the pair of power supply lines and a control circuit configured to control the inverter circuit and the output short-circuiting circuit. The inverter circuit includes a first inverter switch (switching element Q1, Q4) configured to generate first polarity voltage from the DC voltage and a second inverter switch (switching element Q2, Q3) configured to generate second polarity voltage from the DC voltage. The output short-circuiting circuit includes a first short-circuiting switch (switching element Q5) configured to short-circuit the pair of power supply lines when the first polarity voltage is output; and a second short-circuiting switch (switching element Q6) configured to short-circuit the pair of power supply lines when the second polarity voltage is output. In switching to second polarity from first polarity, the control circuit turns the first short-circuiting switch off before timing at which the second inverter switch is turned on.

According to the feature, short-circuiting between the power supply lines near the zero crossing point (a polarity change point TO) can be prevented by turning the first short-circuiting switch off before timing at which the second inverter switch is turned on, whereby reliability of the power converting apparatus can be increased.

In the first feature, in switching to second polarity from first polarity, the control circuit turns the first short-circuiting switch off, after timing at which the level of energy accumulated in a reactor provided subsequent to the output short-circuiting circuit becomes lower than a predetermined level by switching off the first inverter.

According to the feature, occurrence of surge voltage due to a high level of energy remaining in the reactor can be suppressed by turning the first short-circuiting switch off after timing at which the level of energy accumulated in a reactor becomes lower than a predetermined level, whereby reliability of the power converting apparatus can be increased.

In the first feature, the control circuit repeats a process of controlling an on duration of the first inverter switch and the second inverter switch in a predetermined pulse period. In switching to second polarity from first polarity, the control circuit controls the first inverter switch and the second inverter switch such that a time period from a timing of turning off the first inverter switch to a timing of turning on the second inverter switch is longer than the predetermined pulse period.

According to such characteristics, because the period since the first inverter switch is turned off until the second inverter switch is turned on is longer than the predetermined pulse period, it is easy to turn the first short-circuiting switch off before timing at which the second inverter switch is turned off.

A grid interconnection apparatus according to a second feature interconnects a DC power supply to a distribution system. The grid interconnection apparatus includes the power converting apparatus according to the first feature.

A grid interconnection system according to a third feature interconnects a DC power supply to a distribution system. The grid interconnection system includes the power converting apparatus according to the first feature.

### BRIEF DESCRIPTION OF THE DRAWINGS

[Fig. 1] Fig. 1 is a diagram illustrating a configuration of a grid interconnection system provided with a grid interconnection apparatus according to a first embodiment.
[Fig. 2] Fig. 2 is a diagram for illustrating the operation of the grid interconnection apparatus according to the first embodiment.
[Fig. 3] Fig. 3 is a timing diagram for illustrating the operation of the grid interconnection apparatus according to the first embodiment.
[Fig. 4] Fig. 4 is a timing diagram for illustrating the operation of the grid interconnection apparatus according to the first embodiment.
[Fig. 5] Fig. 5 is a detailed timing diagram for illustrating the operation of the grid interconnection apparatus according to the first embodiment.
[Fig. 6] Fig. 6 is a diagram for illustrating a grid interconnection apparatus according to a second embodiment.
[Fig. 7] Fig. 7 is a diagram for illustrating surge voltage.
[Fig. 8] Fig. 8 is a timing diagram for illustrating an operation of the grid interconnection apparatus according to the second embodiment.
[Fig. 9] Fig. 9 is a diagram illustrating a configuration of a grid interconnection system provided with a grid interconnection apparatus according to a third embodiment.
[Fig. 10] Fig. 10 is a diagram illustrating a configuration of a grid interconnection system provided with a grid interconnection apparatus according to a fourth embodiment.
[Fig. 11] Fig. 11 is a diagram illustrating a configuration of a grid interconnection system provided with a grid interconnection apparatus according to a fifth embodiment.
[Fig. 12] Fig. 12 is a timing diagram for illustrating an operation of a grid interconnection apparatus according to a sixth embodiment.
[Fig. 13] Fig. 13 is a timing diagram for illustrating the operation of the grid interconnection apparatus according to the sixth embodiment.
[Fig. 14] Fig. 14 is a timing diagram for illustrating the operation of the grid interconnection apparatus according to the sixth embodiment.
[Fig. 15] Fig. 15 is a timing diagram for illustrating the operation of the grid interconnection apparatus according to the sixth embodiment.
[Fig. 16] Fig. 16 is a timing diagram for illustrating the operation of the grid interconnection apparatus according to the sixth embodiment.
[Fig. 17] Fig. 17 is a timing diagram for illustrating the operation of the grid interconnection apparatus according to the sixth embodiment.

### MODES FOR CARRYING OUT THE INVENTION

First to fifth embodiments and other embodiments of the present invention will be described with reference to the drawings. Each of the following embodiments describes a case in which a power converting apparatus according to the present invention is applied to a grid interconnection apparatus. In the drawings in each of the following embodiments, identical or similar reference numerals are given to identical or similar components.

### (1) First Embodiment

In the first embodiment, (1.1) Configuration of Grid Interconnection Apparatus, (1.2) Operation of Grid Interconnection Apparatus and (1.3) Operation and Effect will be described in this order.

### (1.1) Configuration of Grid Interconnection Apparatus

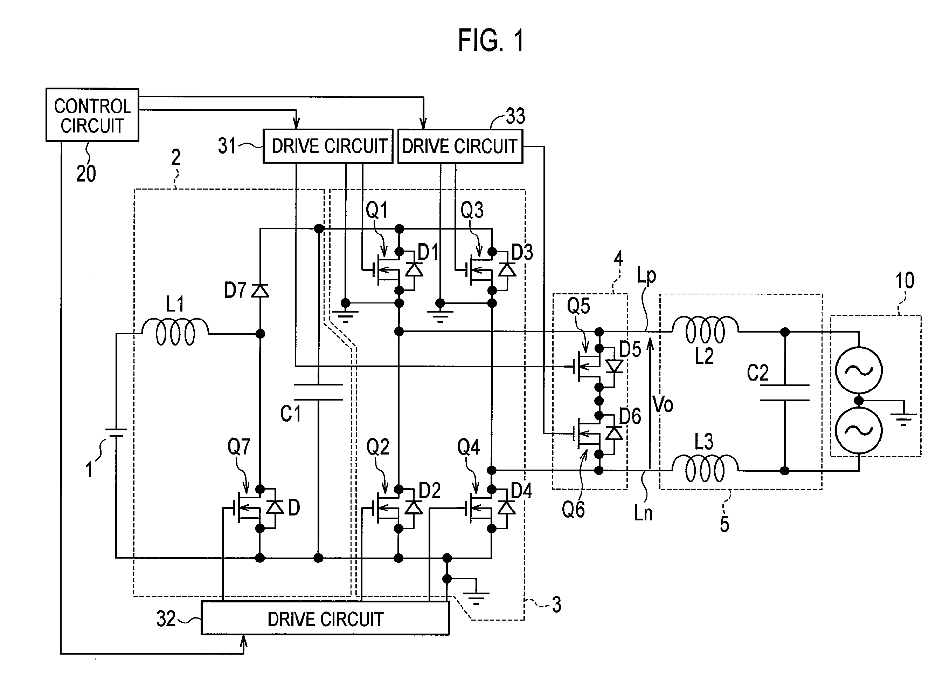

Fig. 1 is a diagram illustrating a configuration of a grid interconnection system provided with a grid interconnection apparatus according to a first embodiment. In the present embodiment, a transless grid interconnection apparatus will be described as an example. It should be noted that, although the ground (GND) symbols illustrate the same component in Fig. 1, these grounds are not interconnected and are different in potential.

As illustrated in Fig. 1, the grid interconnection system is provided with a grid interconnection apparatus which is connected between a DC power supply 1 and a distribution system 10. As the DC power supply 1, a solar cell which is one of the distributed DC power supplies may be used, for example. A solar cell outputs DC power produced by power generation in accordance with sunlight irradiation.

The grid interconnection apparatus is provided with a voltage boost circuit 2, an inverter circuit 3 connected subsequent to the voltage boost circuit 2, an output short-circuiting circuit 4 connected subsequent to the inverter circuit 3, a filter circuit 5 connected subsequent to the output short-circuiting circuit 4, a control circuit 20 and drive circuits 31 to 33. "Preceding" means the side of the DC power supply 1 and "subsequent" means the side of the distribution system 10.

The grid interconnection apparatus converts DC power from the DC power supply 1 into AC power of the commercial frequency (for example, 50 Hz or 60 Hz). Load (not illustrated) installed in a consumer is connected between the grid interconnection apparatus and the distribution system 10. The grid interconnection apparatus performs a grid operation to supply the load with AC power from both the grid interconnection apparatus and the distribution system 10.

The voltage boost circuit 2 steps up input voltage from the DC power supply 1 by high-frequency switching. The voltage boost circuit 2 is provided with a reactor L1, a switching element Q7, a diode D7 and a condenser C1. In the first embodiment, power MOSFET is used as the switching element Q7.

The reactor L1 is connected between a positive electrode of the DC power supply 1 and an anode of the diode D7. The cathode of the diode D7 is connected to the inverter circuit 3.

The switching element Q7 is configured by the power MOSFET, of which drain is connected to the anode of the diode D7, gate is connected to a drive circuit 32 and source is connected to a negative electrode of the DC power supply 1. The diode D is connected antiparallel to the switching element Q7.

The condenser C1 is connected between the cathode of the diode D7 and the negative electrode of the DC power supply 1. The switching element Q7 performs a switching operation in response to a gate signal applied to a gate via the drive circuit 32 from the control circuit 20. The condenser C1 is an energy buffer for maintaining stable output voltage. The voltage between both ends of the condenser C1 is output to the inverter circuit 3 as output voltage of voltage boost circuit 2.

The inverter circuit 3 converts DC voltage output by the voltage boost circuit 2 into AC. In the first embodiment, the inverter circuit 3 is provided with a switching element Q1, a switching element Q2, a switching element Q3 and a switching element Q4 which are full-bridge connected. In the first embodiment, the power MOSFET is used as the switching elements Q1 to Q4.

The switching element Q1 has a drain connected to the cathode of the diode D7, a gate connected to a drive circuit 31 and a source connected to the drive circuit 31 and to a drain of the switching element Q2. The diode D1 is connected antiparallel to the switching element Q1. That is, the diode D1 has an anode connected to a source of the switching element Q1 and a cathode connected to a drain of the switching element Q1. The switching element Q2 has a drain connected to the source of the switching element Q1, a gate connected to the drive circuit 32 and a source connected to the negative electrode of the DC power supply 1. The diode D2 is connected antiparallel to the switching element Q2. The switching element Q3 has a drain connected to the cathode of the diode D7, a gate connected to the drive circuit 33 and a source connected to the drive circuit 33 and to a drain of the switching element Q4. The diode D3 is connected antiparallel to the switching element Q3. The switching element Q4 has a drain connected to the source of the switching element Q3, a gate connected to the drive circuit 32 and a source connected to the negative electrode of the DC power supply 1. The diode D4 is connected antiparallel to the switching element Q4.

The switching element Q1 performs a switching operation in response to a gate signal applied to a gate via the drive circuit 31 from the control circuit 20. The switching elements Q2 and Q4 perform a switching operation in response to a gate signal applied to each gate via the drive circuit 32 from the control circuit 20. The switching element Q3 performs a switching operation in response to a gate signal applied to a gate via the drive circuit 33 from the control circuit 20.

The output short-circuiting circuit 4 is configured to short-circuit a pair of power supply lines Lp and Ln extending from the inverter circuit 3. The output short-circuiting circuit 4 is provided with a switching element Q5, a switching element Q6, a diode D5 and a diode D6. The output short-circuiting circuit 4 is provided with switching elements Q5 and Q6 connected in series between a pair of power supply lines Lp and Ln extending from the inverter circuit 3. The switching element Q5 has a drain connected to a drain of the switching element Q6, a gate connected to the drive circuit 31 and a source connected to the source of the switching element Q1. The diode D5 is connected antiparallel to the switching element Q5. The switching element Q5 short-circuits a pair of power supply lines Lp and Ln when outputting voltage of positive polarity. In particular, the switching element Q5 short-circuits the pair of power supply lines Lp and Ln from below to above direction in Fig. 1 while the switching elements Q1 and Q4 are "off" in a period in which voltage of positive polarity is generated. The switching element Q6 has a drain connected to a drain of the switching element Q5, a gate connected to the drive circuit 33 and a source connected to the source of the switching element Q3. The diode D6 is connected antiparallel to the switching element Q6. The switching element Q6 short-circuits a pair of power supply lines Lp and Ln when outputting voltage of negative polarity. In particular, the switching element Q6 short-circuits the pair of power supply lines Lp and Ln from above to below direction in Fig. 1 while the switching elements Q2 and Q3 are "off" in a period in which voltage of negative polarity is generated.

It should be noted that the configuration of the output short-circuiting circuit 4 is not limited to that described above, but the arrangement of two pairs of devices which configure the output short-circuiting circuit 4 may be changed arbitrarily.

The filter circuit 5 removes a high frequency component of AC power output from the inverter circuit 3 and outputs that AC power to the distribution system 10 (and to the load). The distribution system 10 is, for example, a distribution system of single phase 200V. The filter circuit 5 is provided with reactors L2 and L3 and a condenser C2. A reactor L2 is provided on the power supply line Lp and a reactor L3 is provided on the power supply line Ln. The condenser C2 is connected between the power supply lines Lp and Ln.

The control circuit 20 is configured by, for example, a microcomputer and controls the entire grid interconnection apparatus. The drive circuit 31 drives the switching elements Q1 and Q5 under the control of the control circuit 20. The drive circuit 32 drives the switching elements Q7, Q2 and Q4 under the control of the control circuit 20. The drive circuit 33 drives the switching elements Q3 and Q5 under the control of the control circuit 20.

### (1.2) Operation of Grid Interconnection Apparatus

Next, an operation of the grid interconnection apparatus according to the first embodiment will be described in the order of (1.2.1) Operation in Positive Period and Negative Period and (1.2.2) Operation in Changing Polarity.

### (1.2.1) Operation in Positive Period and Negative Period

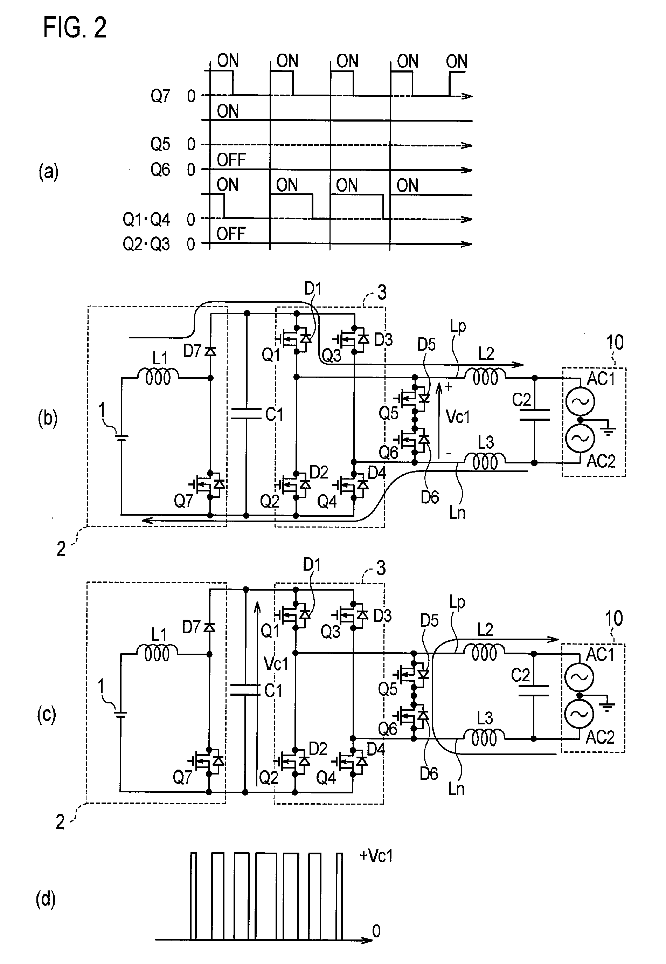

First, an operation in a period in which the grid interconnection apparatus outputs positive voltage will be described. Fig. 2(a) is a timing diagram which illustrates an operation of each switching element of the voltage boost circuit 2, the inverter circuit 3 and the output short-circuiting circuit 4.

As illustrated in Fig. 2(a), the control circuit 20 drives the switching element Q7 of the voltage boost circuit 2 by a PWM pulse such that output voltage of the voltage boost circuit 2, and in particular, voltage between both ends of the condenser C1, is equivalent to a target value. In a period in which the grid interconnection apparatus outputs positive voltage, the control circuit 20 drives the pairs of switching elements Q1 and Q4 of the inverter circuit 3 by the PWM pulse, and keeps the pairs of switching elements Q2 and Q3 of the inverter circuit 3 in the "off" state. The control circuit 20 makes switching operations of the pairs of switching elements Q1 and Q4 performed in a synchronized manner.

In period in which the grid interconnection apparatus outputs positive voltage, the control circuit 20 keeps the switching element Q5 of the output short-circuiting circuit 4 in the "on" state, and keeps the switching element Q6 of the output short-circuiting circuit 4 in the "off" state. In such a state, the current flows to the power supply line Lp from the power supply line Ln via the output short-circuiting circuit 4 but does not flow to the power supply line Ln from the power supply line Lp.

Fig. 2(b) is a diagram illustrating a direction in which the current flows when the pairs of switching elements Q1 and Q4 of the inverter circuit 3 are in the "on" state. Fig. 2(c) is a diagram illustrating a direction in which the current flows when the pairs of switching elements Q1 and Q4 of the inverter circuit 3 are in the "off" state. Fig. 2(d) is a diagram illustrating an output voltage waveform of the inverter circuit 3, and in particular, a diagram illustrating a voltage waveform between each source of the switching elements Q5 and Q6 of the output short-circuiting circuit 4.

As illustrated in Fig. 2(b), when the pairs of switching elements Q1 and Q4 of the inverter circuit 3 are in the "on" state, the current flows to the side of the distribution system 10 from the side of the DC power supply 1 via the reactor L1, the diode D7, the switching element Q1 and the reactor L2. The current flows to the DC power supply 1 from the side of the distribution system 10 via the reactor L3 and the switching element Q4. Supposing that voltage between both ends of the condenser C1 is Vc1, output voltage of the inverter circuit 3 is substantially +Vc1 as illustrated in Fig. 2(d). The standard of the potential is the source of the switching element Q6.

As illustrated in Fig. 2(c), when the pairs of switching elements Q1 and Q4 of the inverter circuit 3 are in the "off" state, the current flows to the side of the distribution system 10 from the side of the distribution system 10 via the reactor L3, the diode D6, the switching element Q5 and the reactor L2. Since the power supply lines Lp and Ln are short-circuited electrically at this time, output voltage of the inverter circuit 3 becomes 0V as illustrated in Fig. 2(d). Although voltage Vc1 between both ends of the condenser C11 is applied to the inverter circuit 3, the current is blocked by the diodes D1 and D3 and thus does not flow in the inverter circuit 3.

By the pairs of switching elements Q1 and Q4 of the inverter circuit 3 repeating the "on" state and the "off" state, the output voltage waveform of the inverter circuit 3 becomes a square-wave waveform of the positive-side half cycle as illustrated in Fig. 2(d). The output voltage waveform of the inverter circuit 3 is smoothed by the filter circuit 5 which is constituted by the reactors L2, L3, and the condenser C2, and becomes a sinusoidal wave of the positive-side half cycle.

In the period in which grid interconnection apparatus outputs negative voltage, the control circuit 20 keeps the pairs of switching elements Q1 and Q4 of the inverter circuit 3 in the "off" state, and drives the pairs of switching elements Q2 and Q3 of the inverter circuit 3 by the PWM pulse. The control circuit 20 makes the switching operations of the pairs of switching elements Q2 and Q3 performed in a synchronized manner.

In the period in which the grid interconnection apparatus outputs negative voltage, the control circuit 20 keeps the switching element Q5 of the output short-circuiting circuit 4 in the "off" state and keeps the switching element Q6 of the output short-circuiting circuit 4 in the "on" state. In such a state, the current flows to the power supply line Ln from the power supply line Lp via the output short-circuiting circuit 4 but does not flow to the power supply line Lp from the power supply line Ln.

Under such control, in the period in which the grid interconnection apparatus outputs negative voltage, the output voltage waveform of the inverter circuit 3 becomes a square-wave waveform of the negative-side half cycle of the amplitude of 0 to -Vc1. The output voltage waveform of the inverter circuit 3 is smoothed by the filter circuit 5 which is constituted by the reactors L2, L3, and the condenser C2, and becomes a sinusoidal wave of the negative-side half cycle.

### (1.2.2) Operation in Changing Polarity

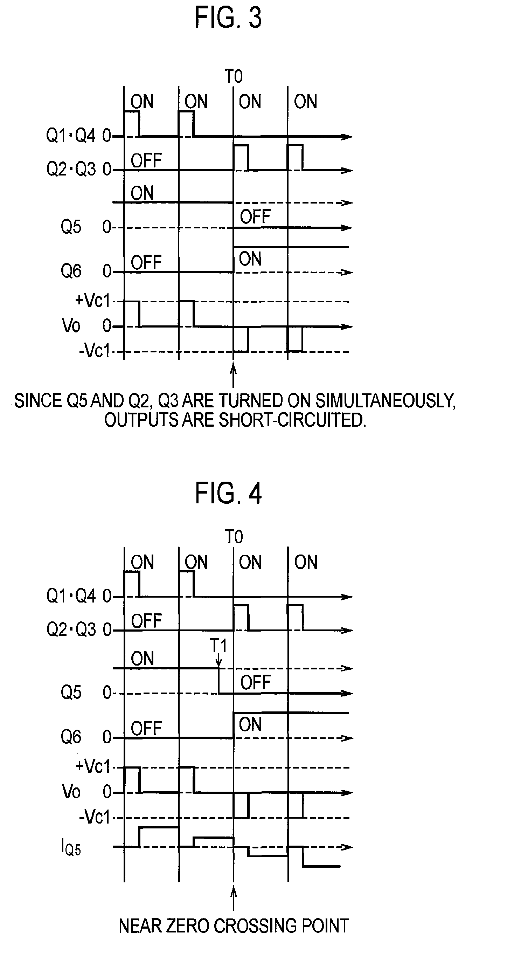

In the grid interconnection apparatus provided with the output short-circuiting circuit 4, as illustrated in Fig. 3, since the pairs of switching elements Q2 and Q3 of the inverter circuit 3 start the switching operation and, at the same time, the state of the switching element Q5 of the output short-circuiting circuit 4 is changed from "on" to "off" when the polarity of the output voltage Vo (see Fig. 1) is changed from positive to negative; it is therefore possible that the pair of switching elements Q2, Q3 and the switching element Q5 is turned on simultaneously. As a result, the power supply lines Lp and Ln are disadvantageously short-circuited by the switching element Q5.

Similarly, since the pairs of switching elements Q1 and Q4 of the inverter circuit 3 start the switching operation and, at the same time, the state of the switching element Q6 of the output short-circuiting circuit 4 is changed from "on" to "off" when the polarity of the output voltage Vo is changed from negative to positive; it is therefore possible that the pair of switching elements Q1, Q4 and the switching element Q6 are turned on simultaneously. As a result, the power supply lines Lp and Ln are disadvantageously short-circuited by the switching element Q6.

Then, the control circuit 20 according to the first embodiment changes the state of the switching elements Q5 and Q6 of the output short-circuiting circuit 4 from "on" to "off" at the timing which is before the polarity change point T0, which is the timing at which the polarity of the output voltage Vo of the inverter circuit 3 is switched.

In particular, the control circuit 20 changes the state of the switching element Q5 of the output short-circuiting circuit 4 from "on" to "off" at the timing T1 (first timing) which is before the polarity change point T0 when the polarity of the output voltage Vo is changed from positive to negative, as illustrated in Fig. 4. Since the switching element has transition time during which the state thereof is changed from "on" to "off," it is preferred that the control circuit 20 changes the state of the switching element Q5 from "on" to "off" such that the timing T1 precedes the polarity change point T0 by at least the transition time during which the state of the switching element Q5 is changed from "on" to "off."

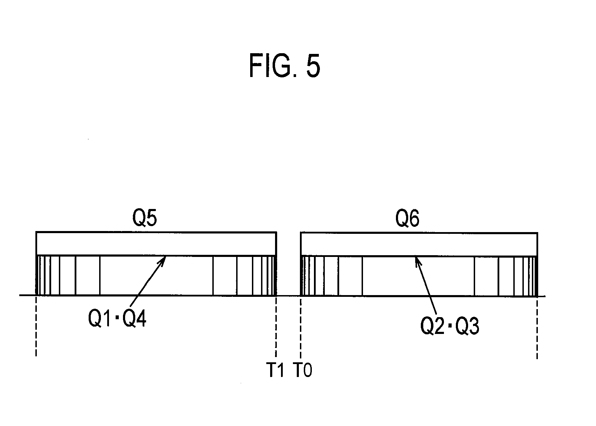

In the first embodiment, the control circuit 20 lets the timing T1 at which the state of the switching element Q5 is changed from "on" to "off" be the same as the timing at which the switching operations of the pairs of switching elements Q1 and Q4 are stopped as illustrated in Fig. 5. In the example illustrated in Fig. 5, there is a time difference, which is greater than the transition time during which the state of the switching element Q5 is changed from "on" to "off," between the timing T1 at which the state of the switching element Q5 is changed from "on" to "off" and the polarity change point T0. The time difference may be defined as, for example, an n period of the switching cycle.

The control circuit 20 changes the state of the switching element Q6 of the output short-circuiting circuit 4 from "on" to "off" at the timing before the polarity change point T0 (first timing), when the polarity of the output voltage Vo is changed from negative to positive. It is preferred that the control circuit 20 changes the state of the switching element Q6 from "on" to "off" such that the switching timing precedes the zero crossing point from negative to positive by at least the transition time during which the state of the switching element Q6 is changed from "on" to "off."

In the first embodiment, the control circuit 20 lets the timing at which the state of the switching element Q6 is changed from "on" to "off" be the same as the timing at which the switching operations of the pairs of switching elements Q2 and Q3 are stopped as illustrated in Fig. 5.

### (1.3) Operation and Effect

As described above, according to the first embodiment, since it is possible to prevent short-circuiting between the power supply lines Lp and Ln near the zero crossing point by the control circuit 20 changing the state of the switching elements Q5 and Q6 of the output short-circuiting circuit 4 from "on" to "off" at the timing before the zero crossing point, reliability of the grid interconnection apparatus can be improved.

In the first embodiment, the control circuit 20 controls the timing at which the state of the switching elements Q5 and Q6 is changed from "on" to "off" to precede the zero crossing point by at least the transition time during which the state of the switching elements Q5 and Q6 of the output short-circuiting circuit 4 is changed. Therefore, since it is possible to more reliably prevent short-circuiting between the power supply lines Lp and Ln near the zero crossing point, reliability of the grid interconnection apparatus can be further improved.

In the first embodiment, the sources of the switching element Q1 and switching element Q5 are kept at the same electric potential by the source of the switching element Q5 provided in the output short-circuiting circuit 4 being connected to the source of the switching element Q1 provided in the inverter circuit 3. Therefore, the switching element Q1 and the switching element Q5 may be driven using a common driving power supply.

The sources of the switching element Q4 and switching element Q6 are kept at the same electric potential by the source of the switching element Q6 provided in the output short-circuiting circuit 4 being connected to the source of the switching element Q4 provided in the inverter circuit 3. Therefore, the switching element Q4 and the switching element Q6 may be driven using a common driving power supply.

### (2) Second Embodiment

Next, a second embodiment will be described. In the following second to fifth embodiments, differences from the first embodiment will be described.

In the first embodiment described above, the state of the switching elements Q5 and Q6 of the output short-circuiting circuit 4 is changed from "on" to "off" at the timing before the zero crossing point. With such control, however, surge voltage may be produced immediately after the change of the state of the switching elements Q5 and Q6 to "off."

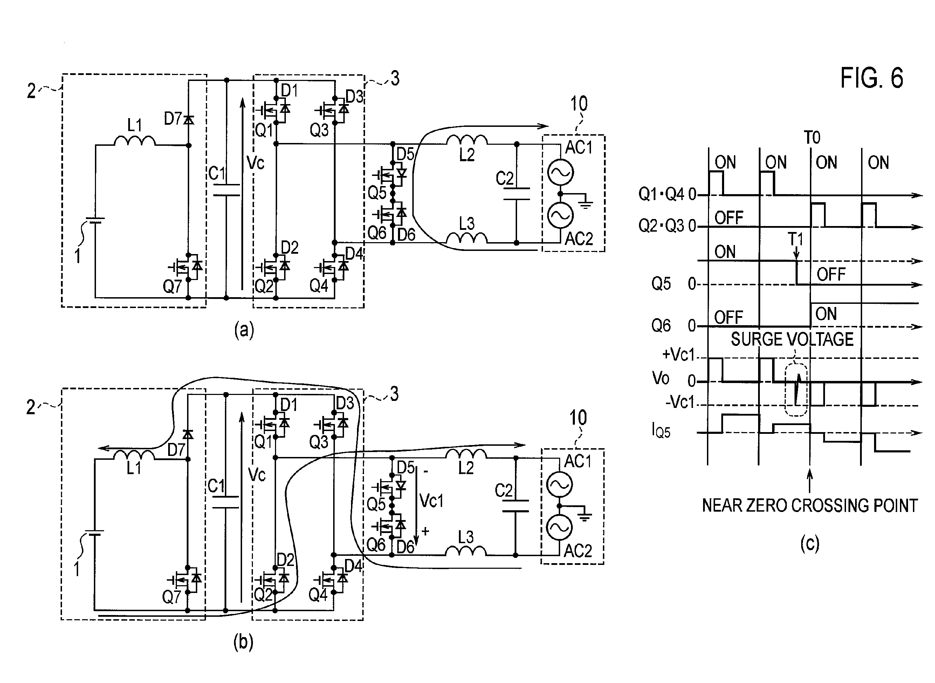

With reference to Fig. 6, this issue will be described referring to an operation during the change of polarity of the output voltage Vo from positive to negative. Fig. 6(a) is a diagram illustrating a flow of current immediately before the change of the state of the switching element Q5 to "off," Fig. 6(b) is a diagram illustrating a flow of current immediately after the change of the state of the switching element Q5 to "off," and Fig. 6(c) is a timing diagram during the occurrence of surge voltage.

As illustrated in Fig. 6(a), immediately before the change of the state of the switching element Q5 to "off," the pairs of switching elements Q1 and Q4 are in the "off" state and the current flows toward the side of the distribution system 10 on a current path via the reactor L3, the diode D6, the switching element Q5 and the reactor L2. At this time, when the states of the pairs of switching elements Q1 and Q4 are changed to "on," energy accumulated in the reactors L2 and L3 is released on the above-described current path. Therefore, as illustrated in Fig. 6(c), a current IQ5 flows through the switching element Q5 near the zero crossing point.

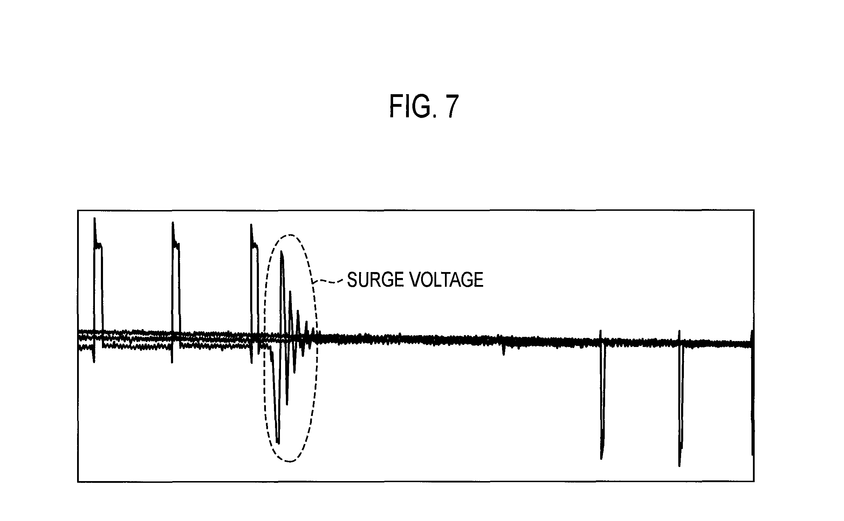

If the state of the switching element Q5 is changed to "off" under such a condition, the above-described current path is interrupted while energy accumulated in the reactors L2 and L3 is not sufficiently released, whereby the current flows on the path illustrated in Fig. 6(b). As a result, surge voltage is produced at both ends of the output short-circuiting circuit 4 (output voltage Vo) immediately after the change of the switching element Q5 to "off" as illustrated in Figs. 6(c) and 7. Production of surge voltage decreases conversion efficiency and causes a failure in the device.

Then, in the second embodiment, production of surge voltage is prevented by providing sufficient time difference to release energy accumulated in the reactors L2 and L3 between the timing at which the switching operations of the pairs of switching elements Q1 and Q4 are stopped and the timing at which the state of the switching element Q5 is changed to "off."

### (2.1) Operation in Changing Polarity

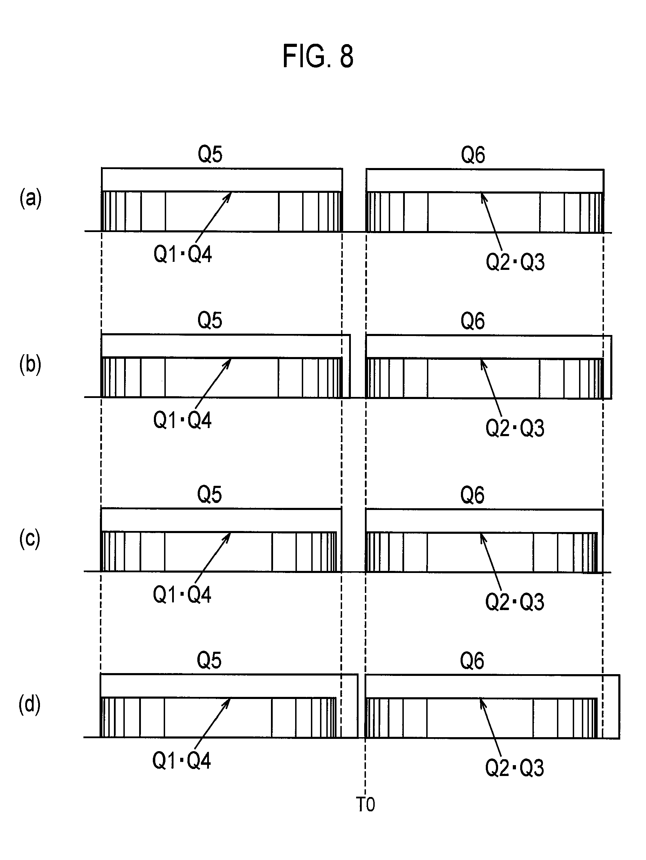

Fig. 8 is a timing diagram for illustrating an operation of the grid interconnection apparatus according to the second embodiment. Fig. 8(a) illustrates an exemplary operation of the grid interconnection apparatus according to the first embodiment as a Comparative Example, Fig. 8(b) illustrates an exemplary operation 1 of the grid interconnection apparatus according to the second embodiment, Fig. 8(c) illustrates an exemplary operation 2 of the grid interconnection apparatus according to the second embodiment and Fig. 8(d) illustrates an exemplary operation 3 of the grid interconnection apparatus according to the second embodiment.

In the exemplary operation 1 according to the second embodiment as illustrated in Fig. 8(b), the control circuit 20 lets the timing at which the switching operations of the pairs of switching elements Q1 and Q4 are stopped be the same as that of the first embodiment, lets the timing at which the state of the switching element Q5 is changed from "on" to "off" be delayed from that of the first embodiment. Time difference greater than the period for the release of energy accumulated in the reactors L2 and L3 to a level at which no problem may be caused is provided between the timing at which the switching operations of the pairs of switching elements Q1 and Q4 are stopped and the timing at which the state of the switching element Q5 is changed from "on" to "off." The time difference may be defined as, for example, an n period of the switching cycle.

In the exemplary operation 2 according to the second embodiment as illustrated in Fig. 8(c), the control circuit 20 lets the timing at which the state of the switching element Q5 is changed from "on" to "off" be the same as that of the first embodiment and lets the timing at which the switching operations of the pairs of switching elements Q1 and Q4 are stopped precede that of the first embodiment. Time difference greater than the period for the release of energy accumulated in the reactors L2 and L3 to a level at which no problem may be caused is provided between the timing at which the switching operations of the pairs of switching elements Q1 and Q4 are stopped and the timing at which the state of the switching element Q5 is changed from "on" to "off."

In the exemplary operation 3 according to the second embodiment as illustrated in Fig. 8(d), the control circuit 20 lets the timing at which the state of the switching element Q5 is changed from "on" to "off" be delayed from that of the first embodiment and, at the same time, lets the timing at which the switching operations of the pairs of switching elements Q1 and Q4 are stopped precede that of the first embodiment. Time difference greater than the period for the release of energy accumulated in the reactors L2 and L3 to a level at which no problem may be caused is provided between the timing at which the switching operations of the pairs of switching elements Q1 and Q4 are stopped and the timing at which the state of the switching element Q5 is changed from "on" to "off."

According to the exemplary operations 1 to 3, since the time difference is provided between the timing at which the switching operations of the pairs of switching elements Q1 and Q4 are stopped and the timing at which the state of the switching element Q5 is changed from "on" to "off," the state of the switching element Q5 can be changed from "on" to "off" after energy accumulated in the reactors L2 and L3 are released to a level at which no problem may be caused.

### (2.2) Operation and Effect

As described above, according to the second embodiment, since the state of the switching element Q5 can be changed from "on" to "off" after energy accumulated in the reactors L2 and L3 are released to a level at which no problem may be caused, production of surge voltage can be suppressed and reliability of the grid interconnection apparatus can be improved.

### (3) Third Embodiment

Next, a third embodiment will be described. In the first embodiment and the second embodiment described above, since the timing at which the switching operation of the switching element of the inverter circuit 3 is stopped and the timing at which the state of the switching element of the output short-circuiting circuit 4 is changed from "on" to "off" precede the zero crossing point, an amount of the current supplied to the load via the switching element of the output short-circuiting circuit 4 is reduced. However, the reduced amount can be compensated by the condenser C2 of the filter circuit 5 and thus has no problem on a circuit operation.

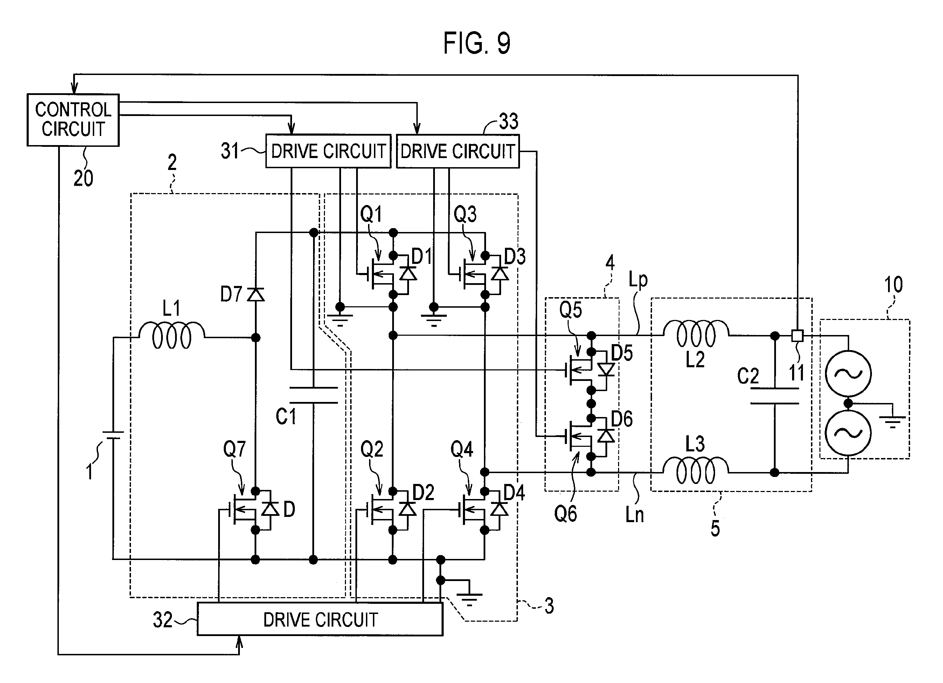

Taking advantage of such properties, in the third embodiment, a current detector 11 for detecting an output side current of the filter circuit 5 is provided as illustrated in Fig. 9 and the control circuit 20 controls in accordance with the current detected by the current detector 11. Therefore, favorable control can be made even if the timing at which the switching operation of the switching element of the inverter circuit 3 is stopped and the timing at which the state of the switching element of the output short-circuiting circuit 4 is changed from "on" to "off" precede the zero crossing point.

### (4) Fourth Embodiment

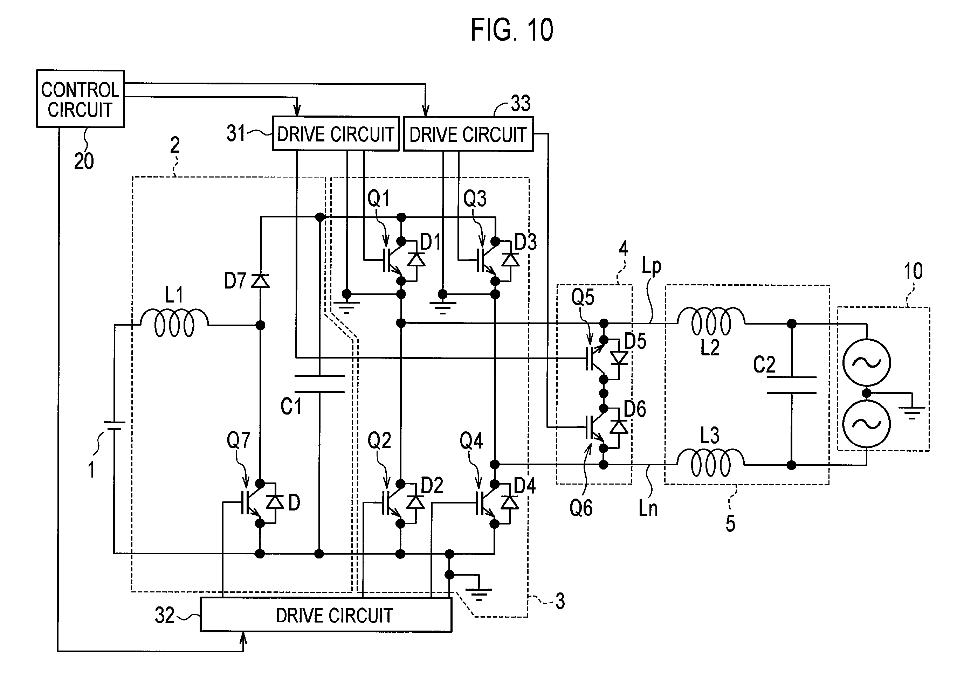

Next, a fourth embodiment will be described. The grid interconnection apparatus according to the fourth embodiment differs from the first embodiment in that the kind of the switching element used in each of the voltage boost circuit 2, the inverter circuit 3 and the output short-circuiting circuit 4 is an IGBT. Fig. 10 is a diagram illustrating a configuration of a grid interconnection system provided with a grid interconnection apparatus according to the fourth embodiment.

As illustrated in Fig. 10, the switching element Q1 has a collector connected to the cathode of the diode D7, a gate connected to the drive circuit 31 and an emitter connected to the drive circuit 31 and to a collector of the switching element Q2. The switching element Q2 has a collector connected to the emitter of the switching element Q1, a gate connected to the drive circuit 32 and an emitter connected to the negative electrode of the DC power supply 1. The switching element Q3 has a collector connected to the cathode of the diode D7, a gate connected to the drive circuit 33 and an emitter connected to the drive circuit 33 and to a collector of the switching element Q4. The switching element Q4 has a collector connected to the emitter of the switching element Q3, a gate connected to the drive circuit 32 and an emitter connected to the negative electrode of the DC power supply 1.

The switching element Q5 has a collector connected to a collector of the switching element Q6, a gate connected to the drive circuit 31 and an emitter connected to the emitter of the switching element Q1. The diode D5 is connected antiparallel to the switching element Q5. The switching element Q6 has a collector connected to a collector of the switching element Q5, a gate connected to the drive circuit 33 and an emitter connected to the emitter of the switching element Q3. The diode D6 is connected antiparallel to the switching element Q6.

### (5) Fifth Embodiment

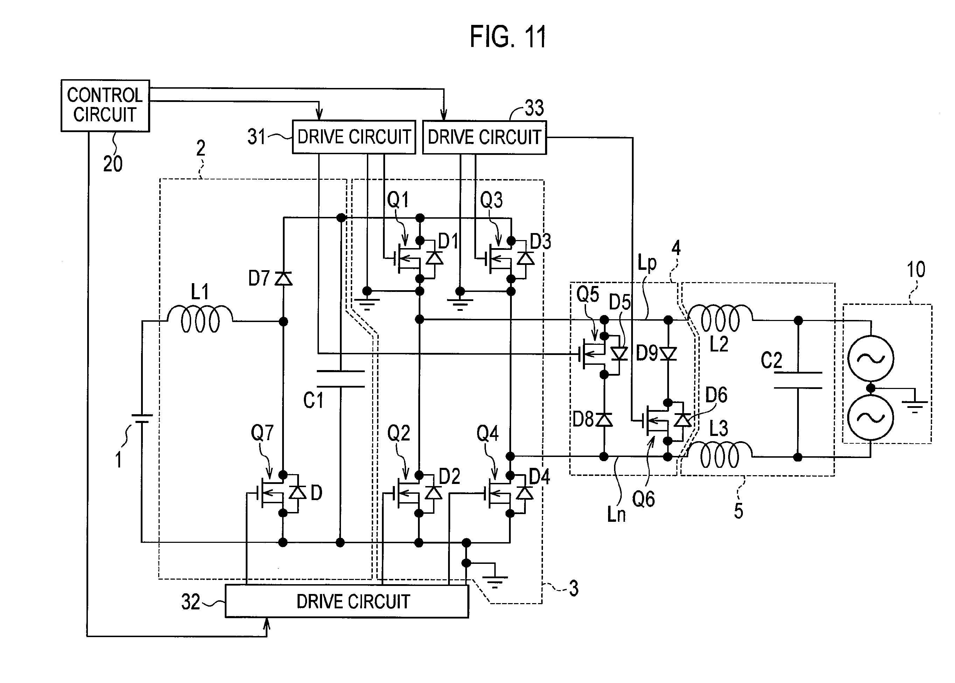

Next, a fifth embodiment will be described. The grid interconnection apparatus according to the fifth embodiment differs from the first embodiment in a configuration of the output short-circuiting circuit 4. Fig. 11 is a diagram illustrating a configuration of a grid interconnection system provided with a grid interconnection apparatus according to the fifth embodiment.

As illustrated in Fig. 11, the output short-circuiting circuit 4 has a two-arm configuration which has two arm circuits connected in parallel between the pair of power supply lines Lp and Ln extending from the inverter circuit 3.

A first arm circuit is provided with the switching element Q5 and a diode D8 connected in series between the power supply lines Lp and Ln. A second arm circuit is provided with the switching element Q6 and a diode D9 connected in series between the power supply lines Lp and Ln in an inverse direction of the first arm circuit.

The switching element Q5 has a drain connected to a cathode of the diode D8, a gate connected to the drive circuit 31 and a source connected to the source of the switching element Q1. The diode D5 is connected antiparallel to the switching element Q5. An anode of the diode D8 is connected to the power supply line Ln. The switching element Q6 has a drain connected to a cathode of the diode D9, a gate connected to the drive circuit 33 and a source connected to the source of the switching element Q3. The diode D6 is connected antiparallel to the switching element Q6. An anode of the diode D9 is connected to the power supply line Lp.

In the fifth embodiment, the diodes D8 and D9 do not use a parasitic diode of MOSFET or a diode built in the IGBT but can use independent diodes. That is, the diode can be selected with a greater degree of flexibility and thus a more appropriate circuit design can be made.

### (6) Sixth Embodiment

In a sixth embodiment, the switching timing of a first inverter switch (the switching elements Q1 and Q4), a second inverter switch (the switching elements Q2 and Q3), a first short-circuiting switch (the switching element Q5), and a second short-circuiting switch (the switching element Q6) upon switching to second polarity from first polarity will be described.

In the sixth embodiment, switching to negative polarity from positive polarity will be described. Of course, switching to positive polarity from negative polarity is performed in the same manner as that of the sixth embodiment.

It should be noted that, in the following, the "on" duration of the switching elements Q1 to Q4 is controlled in a predetermined pulse period T. The predetermined pulse period T may be regarded as clock frequency produced by a CPU (not illustrated).

It should be noted that, in all the switching timing described below, the timing at which the first short-circuiting switch (the switching element Q5) is turned off precedes the timing at which the second inverter switch (the switching elements Q2 and Q3) is turned on.

### (6.1) Switching Timing 1

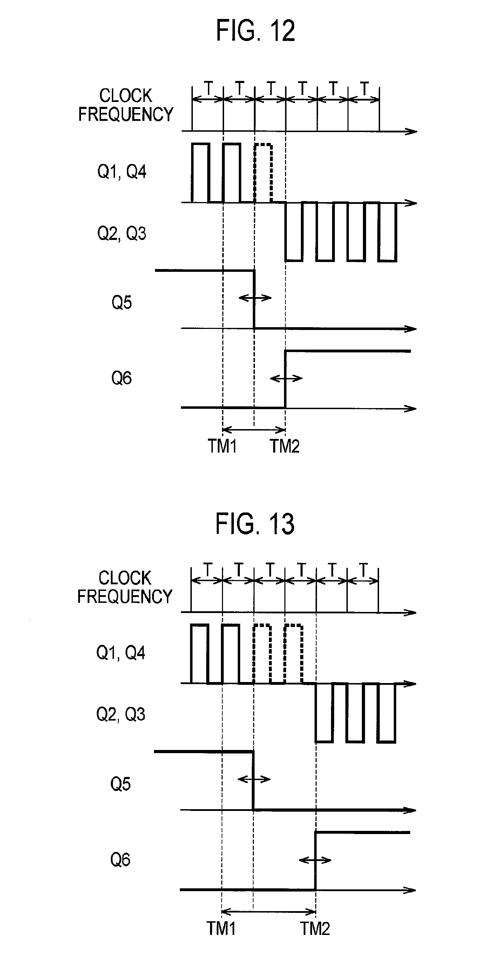

If one pulse period (T x 1) is a standard of an interval of the switching to negative polarity to positive polarity, it is only necessary to turn the switching element Q5 off in a period between the timing TM1 at which the switching elements Q1 and Q4 are turned on for the second to the last time and the timing TM2 at which the switching elements Q2 and Q3 are turned on for the first time as illustrated in Fig. 12. The timing at which the switching element Q6 is turned on may be determined arbitrarily.

For ease of description, the last pulses of the switching elements Q1 and Q4 are illustrated in Fig. 12, but these last pulses do not exist actually.

### (6.2) Switching Timing 2

If two pulse periods (T x 2) is a standard of an interval of the switching to negative polarity to positive polarity, it is only necessary to turn the switching element Q5 off in a period between the timing TM1 at which the switching elements Q1 and Q4 are turned on for the third to the last time and the timing TM2 at which the switching elements Q2 and Q3 are turned on for the first time as illustrated in Fig. 13. The timing at which the switching element Q6 is turned on may be determined arbitrarily.

For ease of description, the last and the second to the last pulses of the switching elements Q1 and Q4 are illustrated in Fig. 13, but the last and the second to the last pulses do not exist actually.

### (6.3) Switching Timing 3

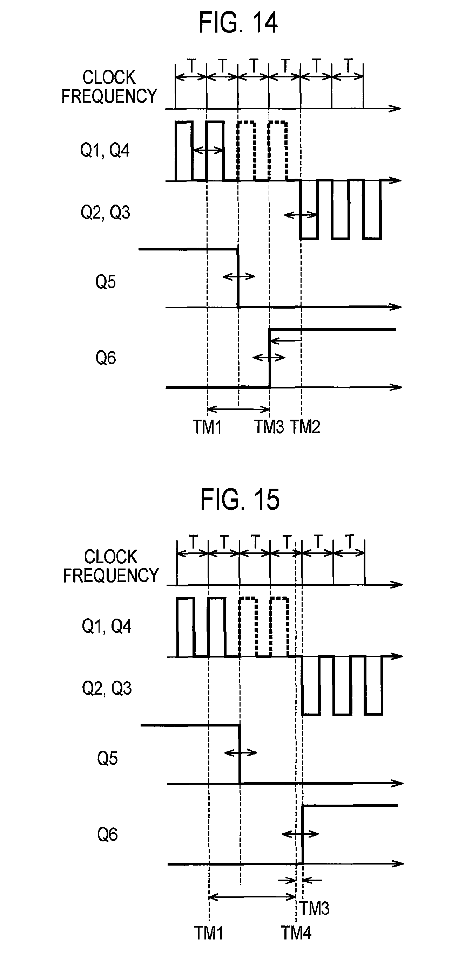

If two pulse periods (T x 2) is a standard of an interval of the switching to negative polarity to positive polarity, as illustrated in Fig. 14, the switching element Q6 is turned on at timing TM3 which precedes, by predetermined time, the timing TM2 at which the switching elements Q2 and Q3 are turned on for the first time. In such a case, it is only necessary to turn the switching element Q5 off in a period between the timing TM1 at which the switching elements Q1 and Q4 are turned on for the third to the last time and the timing TM3 at which the switching element Q6 is turned on.

For ease of description, the last and the second to the last pulses of the switching elements Q1 and Q4 are illustrated in Fig. 14, but the last and the second to the last pulses do not exist actually.

### (6.4) Switching Timing 4

If two pulse periods (T x 2) is a standard of an interval of the switching to negative polarity to positive polarity, as illustrated in Fig. 15, it is only necessary to turn the switching element Q5 off before timing TM4 which precedes, by predetermined time, the timing TM3 at which the switching element Q6 is turned on. That is, it is only necessary to turn the switching element Q5 off in a period between the timing TM1 at which the switching elements Q1 and Q4 are turned on for the third to the last time and the timing TM4 which precedes, by predetermined time, the timing TM3 at which the switching element Q6 is turned on.

The timing at which the switching element Q6 is turned on may be determined arbitrarily. However, it should be noted that, as stated above, the timing at which the switching element Q5 is turned off needs to precede the timing TM2 at which the switching elements Q2 and Q3 are turned on.

The interval between the timing TM3 at which the switching element Q6 is turned on and the timing TM4 is a difference between a period since "off" is input in a gate signal of the switching element Q5 until the gate signal becomes lower than a first threshold (turn-off period) and a period since "on" is input in a gate signal of the switching element Q6 until the gate signal becomes higher than a second threshold (turn-on period).

For ease of description, the last and the second to the last pulses of the switching elements Q1 and Q4 are illustrated in Fig. 15, but the last and the second to the last pulses do not exist actually.

### (6.5) Switching Timing 5

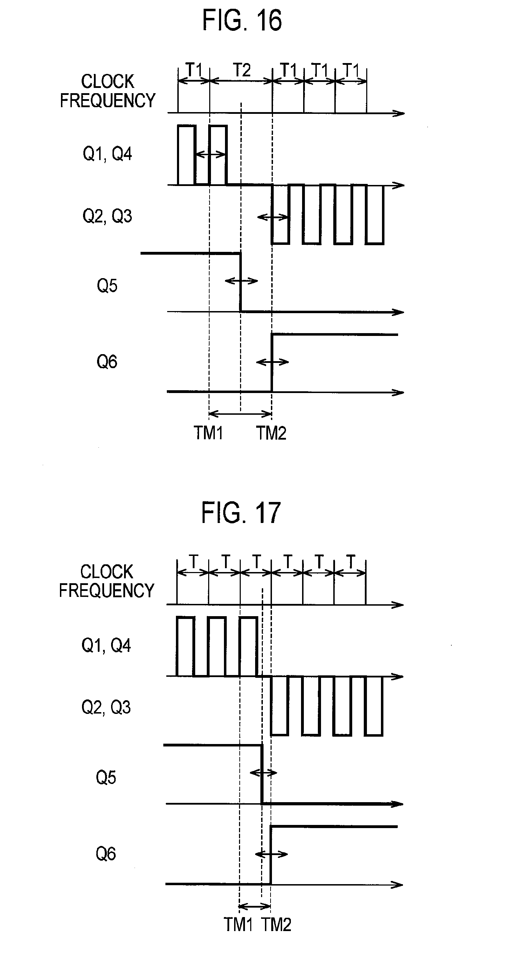

In the switching to negative polarity from positive polarity, the period T2 since the switching elements Q1 and Q4 are turned on for the last time until the switching elements Q2 and Q3 are turned on for the first time is longer than a predetermined pulse period T1 as illustrated in Fig. 16. That is, the period T2 is longer than the predetermined pulse period T1 during which the "on" duration of the switching elements Q1 to Q4 are controlled.

Therefore, it is easy to turn the switching element Q5 off before the timing TM2 at which the switching elements Q2 and Q3 are turned on.

### (6.6) Switching Timing 6

If no pulse period is provided as an interval of the switching to negative polarity to positive polarity, it is only necessary to turn the switching element Q5 off in a period between the timing TM1 at which the switching elements Q1 and Q4 are turned on for the last time and the timing TM2 at which the switching elements Q2 and Q3 are turned on for the first time as illustrated in Fig. 17. The timing at which the switching element Q6 is turned on may be determined arbitrarily.

### (7) Other Embodiments

As described above, although the present invention has been described with reference to the embodiment, it should not be understood that the discussion and the drawings which constitute a part of the present invention is restrictive to the invention. Various alternatives, examples and operational techniques will be clear to a person skilled in the art from this disclosure.

For example, each embodiment described above may be implemented alone or may be implemented in combination with one another.

Although the inverter circuit 3 is provided with four switching elements and the output short-circuiting circuit 4 is provided with two switching elements in each embodiment described above, the circuit configuration is not limited thereto; a configuration in which the inverter circuit 3 is provided with only two switching elements and in which the output short-circuiting circuit 4 is provided with only one switching element may be employed.

The voltage boost circuit 2 is used in each embodiment described above; however, in a case in which, for example, voltage of the DC power supply is higher than voltage of the distribution system, the voltage boost circuit 2 may be replaced with a voltage buck circuit.

The configuration in which the voltage boost circuit or the voltage buck circuit is provided between the DC power supply 1 and the inverter circuit 3 is not restrictive; a configuration in which output voltage of the DC power supply 1 is directly used as an input in the inverter circuit 3 not via the voltage boost circuit or the voltage buck circuit may be employed.

In each embodiment described above, the solar cell has been exemplified as the DC power supply 1; but the solar cell is not restrictive and other DC power supplies, such as a fuel cell and a storage battery, may also be used.

As described above, the embodiments in which the power converting apparatus of the present invention is applied to the grid interconnection apparatus have been described, but the case in which the power converting apparatus of the present invention is applied to the grid interconnection apparatus is not restrictive; the power converting apparatus of the present invention may also be applied to any devices other than the grid interconnection apparatus as long as they have a circuit configuration for converting DC into AC.

The diode D7 illustrated in Figs. 1 and 6, for example, may be replaced by other switching elements, such as FET and IGBT. In such a case, the power converting apparatus can be used not only for the control under which electricity is output from the DC power supply 1 but for the control under which electricity is input to the DC power supply 1. Of course, in such a case, the inverter circuit 3 functions as a voltage buck circuit.

A case in which the filter circuit 5 including the reactor L3 has been exemplified in the embodiment. However, the embodiment is not limited to the same. For example, the reactor may be provided in the load subsequent to the output short-circuiting circuit 4. For example, in a case in which the load including a winding unit, such as a motor, is subsequent to the output short-circuiting circuit 4, the winding unit (coil) is a reactor. In such a case, the control circuit 120 turns the short-circuiting switch (the switching element Q5 or the switching element Q5) off after the timing at which the level of energy accumulated in the winding unit (coil) becomes lower than a predetermined level.

It is to be understood that the present invention encompasses, for example, various other embodiments not expressly stated herein. Accordingly, the present invention shall only be limited by the matter to define the invention to be reasonably understood from this disclosure and defined by the appended claims.

The entire content of Japanese Patent Application No. 2010-042484 (filed February 26, 2010) is incorporated to the specification of the present application by reference.

### INDUSTRIAL APPLICABILITY

According to the present invention, a power converting apparatus, a grid interconnection apparatus and a grid interconnection system with improved reliability in a circuit system provided with an output short-circuiting circuit can be provided.

## Claims

1. A power converting apparatus which includes an inverter circuit configured to convert DC voltage into AC voltage and output the AC voltage to a pair of power supply lines, an output short-circuiting circuit configured to short-circuit the pair of power supply lines and a control circuit configured to control the inverter circuit and the output short-circuiting circuit, wherein:
the inverter circuit includes a first inverter switch configured to generate first polarity voltage from the DC voltage and a second inverter switch configured to generate second polarity voltage from the DC voltage;
the output short-circuiting circuit includes a first short-circuiting switch configured to short-circuit the pair of power supply lines when the first polarity voltage is output; and a second short-circuiting switch configured to short-circuit the pair of power supply lines when the second polarity voltage is output; and
in switching to second polarity from first polarity, the control circuit turns the first short-circuiting switch off before timing at which the second inverter switch is turned on.

2. The power converting apparatus according to claim 1, wherein, in switching to second polarity from first polarity, the control circuit turns the first short-circuiting switch off, after timing at which the level of energy accumulated in a reactor provided subsequent to the output short-circuiting circuit becomes lower than a predetermined level by switching off the first inverter.

3. The power converting apparatus according to claim 1, wherein:
the control circuit repeats a process of controlling an on duration of the first inverter switch and the second inverter switch in a predetermined pulse period; and
in switching to second polarity from first polarity, the control circuit controls the first inverter switch and the second inverter switch such that a time period from a timing of turning off the first inverter switch to a timing of turning on the second inverter switch is longer than the predetermined pulse period.

4. A grid interconnection apparatus configured to interconnect a DC power supply to a distribution system, the grid interconnection apparatus comprising the power converting apparatus according to any one of claims 1 to 4.

5. A grid interconnection system configured to interconnect a DC power supply to a distribution system, the grid interconnection system comprising the power converting apparatus according to any one of claims 1 to 4.
